(19) Europäisches Patentamt / European Patent Office / Office européen des brevets

(11) **EP 4 239 391 A1**

(12) **EUROPEAN PATENT APPLICATION**

(43) Date of publication:
06.09.2023 Bulletin 2023/36

(21) Application number: 22159885.7

(22) Date of filing: 03.03.2022

(51) International Patent Classification (IPC):
*G02B 21/36* (2006.01)    *G02B 7/182* (2021.01)
*G02B 26/08* (2006.01)

(52) Cooperative Patent Classification (CPC):
**G02B 21/367; G02B 21/06;** G02B 26/0833

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Healthcare GmbH
91052 Erlangen (DE)**

(72) Inventors:
• **Dethlefsen, Mark
91058 Erlangen (DE)**
• **Mach, Tivadar
10179 Berlin (DE)**

(74) Representative: **Maier, Daniel Oliver
Siemens AG
Postfach 22 16 34
80506 München (DE)**

(54) **PTYCHOGRAPHIC IMAGING SYSTEM AND METHOD FOR SETTING UP A PTYCHOGRAPHIC IMAGING SYSTEM**

(57) **The invention relates to a ptychographic imaging system** (100), comprising at least one light source (2), a converging lens (6) and a rotatable mirror (4) configured to be placed at a 2f plane of the converging lens (6) and reflect light beams emitted from the light source (2) to the converging lens (6).

FIG 1

EP 4 239 391 A1

**Description**

The present invention relates to a (Fourier) ptychographic imaging system and a method for setting up a (Fourier) ptychographic imaging system.

State of the Art

Fourier Ptychography Microscopy (FPM) is a novel computational microscopy technique that generates high resolution images at large Field of Views (FoV). This is achieved by capturing images of a sample under various illumination angles both within and greater than the Numerical Aperture (NA) of the used objective and iteratively combining these images in Fourier space into a high-resolution image.

Illumination angles are chosen in such a way that images are overlapping by approximately 40% in Fourier Space and also depending on several parameters such as the used objective or the detector. The resolution limit of an FPM microscope is determined by the sum over the used microscope objective and the maximum illumination angle ($\alpha_{max}$) times the refractive index of the medium (n), which can be represented by the following equations:

$$R = \frac{\lambda}{2 * NA_{sys}};$$

$$NA_{sys} = NA_{Obj} + NA_{Illu} = NA_{Obj} + n * sin(\alpha_{max}).$$

While this technique is rapidly gaining interest for a range of applications in medical technologies and beyond, there are a number of limitations, some of which are related to the method of illuminating the sample.

Currently, illumination in Fourier Ptychography Microscopy is predominantly achieved by using LED arrays. Numerous designs of such arrays have been proposed, e.g. in the form of flat arrays or hemispherical designs. However, in general, they all follow the same following design concept: LEDs are attached to a carrier board which is then placed at a certain distance from the sample. Afterwards, the LEDs are flashed consecutively in order to achieve illumination under a specific illumination angle.

Such an arrangement gives rise to the advantage of lowering the manufacturing costs and the overall simplicity of the system. However, it also has several drawbacks. For instance, LEDs commonly used in the FPM are only partially coherent light-sources which can affect the quality of the reconstructed high-resolution images.

In addition, once the carrier board has been designed, illumination angles are relatively fixed, and time-consuming modifications to the setup are required to change illumination parameters such as illumination angles or overlaps in Fourier space, which leads to a loss of flexibility.

Due to the requirement of multiple light-sources, only low-power LEDs with relatively low heat generation can be used. This reduces the throughput of the ptychographic imaging system as the low intensity needs to be countered by longer image acquisition time in order to achieve an acceptable Signal-to-Noise Ratio (SNR).

The incoherence in the light-source can in part be addressed during the reconstruction. For example, instead of reconstructing the whole FoV in one go, it is divided into numerous subsections that are reconstructed individually and then stitched together to create the final high-resolution image. This solution adds, however, additional burden on the computational image reconstruction, thus resulting in a reduced system throughput.

If the overlaps between images in the Fourier space need to be changed, the illumination is usually modified by physically moving the sample up and down as required, thereby changing the illumination angle. However, this approach is severely limited by the spacing of the LEDs on the carrier board and potentially time consuming.

One known way of increasing the throughput of FPM microscopes is the use of LED multiplexing, e.g., simultaneously turning on at least two LEDs. However, this solution again increases the computational burden of the reconstruction and in addition quickly leads to a degradation of the image quality of the reconstructed high-resolution image.

As to the drawback mentioned above regarding the low flexibility, there are a few implementable solutions available in the prior art. For instance, WO 2016/187591 A1 discloses laser-based Fourier ptychographic imaging systems and methods which suggest several options of using a laser for FPM, one of which uses two lenses. The solution proposed in here is simpler however, due to the need for a single lens.

Article "Fourier ptychography: current applications and future promises" by Konda et al. lists important details for successful experimental implementation of Fourier ptychography and discusses its relationship with some conventional computational imaging techniques.

Article "A phase space model of Fourier ptychographic microscopy" by Horstmeyer et al. proposes a mathematical model of FPM that explicitly connects its operation to conventional ptychography, which is a common procedure applied to electron and X-ray diffractive imaging.

Article "Apodized coherent transfer function constraint for partially coherent Fourier ptychographic microscopy" by Chen et al. analyzes the coherence of an FPM system and proposes a constraint approach termed Apodized CTF (AC) constraint in Fourier space.

Article "Multiplexed coded illumination for Fourier Ptychography with an LED array microscope" by Tian et al. demonstrates a multiplexed illumination strategy in which multiple randomly selected LEDs are turned on for each image.

Accordingly, it is an object of the present invention to overcome at least a part of the drawbacks mentioned above and provide an improved ptychographic imaging system.

Summary of the Invention

This object is inventively achieved by the subject matter of the independent claims. Advantageous further developments may be taken from the dependent claims.

The invention provides, according to a first aspect, a ptychographic imaging system, comprising at least one light source, a converging lens and a rotatable mirror configured to be placed at a 2f plane of the converging lens and reflect light beams emitted from the light source to the converging lens.

The focal plane of a lens is a plane that is perpendicular to the axis of the lens and passes through the focal point. A 2f plane of the lens is a plane which is parallel to the focal plane and has a distance to the center of the lens which is twice the distance between the center of the lens and the focal point.

It is favorable that in the present invention, a novel way of generating a highly flexible, multi angle illumination of a sample is provided, which can be combined with a wide range of light sources. This is achieved by placing a rotatable mirror in a 2f plane of a converging/focusing lens, while placing a sample in the other 2f plane of the converging/focusing lens. Due to this arrangement, every photon emitted from the light source, reflected by the mirror and passing through the lens is focused onto the sample.

When the mirror has been rotated by a certain angel, the angel of reflection of a ray or a beam is changed such that the reflected beam arrives at a different position of the lens, while the reflected beam passing through the converging lens still converges to the sample placed in the other 2f plane of the lens.

A reflected beam before arriving at the lens and the beam which passed through the lens are symmetrical to the lens. With the changed angle of reflection due to the rotation of the mirror, the beam which passed through the lens, arrives at the sample and illuminates it is adapted accordingly. This allows for a changed illumination angle for each image, exhibiting the same functionality as the LEDs in an array which are flashed consecutively in order to achieve illumination under a specific illumination angle, meanwhile avoiding the drawbacks mentioned above.

It is advantageous that contrary to the solution in the prior art using an LED array, only a single light source is needed according to the present invention. Thus, it is possible to use a wide range of light sources and to easily change the type of the single light source for accomplishing different purposes. Moreover, it is possible to use high-power light sources, which allows for a higher sample throughput and a better SNR.

Compared to the implementation in WO 2016/187591 A1 the complexity of the system is also significantly reduced due to the need for only a single lens.

In addition, with the possibility of using a single light source, the flexibility in freely choosing the illumination pattern is improved.

Furthermore, in an illumination solution with an LED array, the number of the used illumination angles is limited by e.g. the arrangement of the LEDs and the smallest distance between two adjacent LEDs. Inventively, due to the converging lens and the arrangement of the rotatable mirror which can be rotated by a considerably small angle for each image, the number of illumination angles to be measured is improved. Thereby, parameters such as the number of images and the overlap in a Fourier space of individual images can be freely tuned to match possible requirements. This leads to an improved final imaging quality.

Besides, inventively, it is possible to easily place additional optical components into the beam path before reaching the sample or before the mirror to further improve the flexibility.

In a preferable embodiment of the ptychographic imaging system, the ptychographic imaging system comprises a sample position placed at the other 2f plane of the converging lens.

The sample position is a position where a sample to be observed is to be placed. The 2f plane and the other 2f plane are symmetrically arranged to the converging lens, similar to the two focal planes which are also symmetrically located nearer to the converging lens.

In a further preferable embodiment of the ptychographic imaging system, a resolution limit of the ptychographic imaging system is configured to be in relation to a maximum illumination angel which is determined by a diameter and a focal length of the converging lens.

The main limiting factors to the resolution are the size and the focal length of the lens as well as the ability to control the position of the mirror. Analogous to classical FPMs, the resolution limit of the ptychographic imaging system in the present invention is in relation to the maximum illumination angles. This maximum illumination angle ($\alpha_{max}$) is, in turn, determined by the diameter (d) and the focal length (f) of the converging lens:

$$\alpha_{max} = arc\tan\left(\frac{d/2}{2f}\right).$$

Other factors, such as the refractive index of the medium which is normally air and the resolving power of used imaging optics such as the used microscope objective, together with the maximum illumination angles determine the resolution limit of the ptychographic imaging system.

In a further preferable embodiment of the ptychographic imaging system, the mirror is configured to locate at the intersection point between an optical axis and the 2f plane of the converging lens, and/or a normal of the mirror is parallel to the plane formed by the optical axis and the 2f plane of the converging lens.

In a further preferable embodiment of the ptychographic imaging system, an emitted light beam and a reflected light beam form an angel which changes when the mirror is rotated and which is limited by the diameter and the focal length of the converging lens.

This angle is either the complementary angle of the illumination angle or the sum of the illumination angle and a right angle, in particular when the light source is mounted at 90° to the optical axis of the converging lens.

In a further preferable embodiment of the ptychographic imaging system, the mirror is configured to be rotated about the axis which passes through the intersection point between an optical axis and the 2f plane of the converging lens and is perpendicular to the plane formed by the optical axis and the 2f plane of the converging lens.

In a further preferable embodiment of the ptychographic imaging system, the mirror is configured to be rotated by a predefined angle for each image.

In a further preferable embodiment of the ptychographic imaging system, the ptychographic imaging system comprises a control unit configured to control the position and/or the rotation of the mirror.

In particular, the control unit is electrically connected to an actuator attached to the mirror for controlling the movement of the mirror.

In a further preferable embodiment of the ptychographic imaging system, the light source is a collimated light-source.

A collimated light-source is able to emit a collimated beam of light which has parallel rays, and therefore will spread minimally as it propagates. Light can be approximately collimated by a number of processes, for instance by means of a collimator which is a device which narrows a beam of particles or waves, meaning to cause the directions of motion to become more aligned in a specific direction (i.e., make collimated light or parallel rays).

By using a collimated light-source, it is allowed to freely choose the illumination angle of each image by rotating the mirror.

In a further preferable embodiment of the ptychographic imaging system, the light source is a laser. This laser-based illumination addresses the coherence problem and the low SNR/intensity issue.

In a further preferable embodiment of the ptychographic imaging system, the light source is a high-power LED with a working power more than 0.5W, in particular more than 1W, preferably more than 5W.

Similar to the embodiment using a laser as the light source, a high-power white LED coupled with a bandpass filter can also solve the problems regarding coherence and intensity, without having to concern the heat issue brought by the use of an LED array with multiple LEDs.

In a further preferable embodiment of the ptychographic imaging system, the ptychographic imaging system comprises a beam expander arranged between the converging lens and the light source. Thereby, a uniform illumination of the sample is achieved.

In particular, the beam expander can be placed into the beam path before the mirror to generate even illumination across the FoV of the objective used. A beam expander is an optical system for increasing or decreasing the diameter of a (laser) beam by a predefined factor.

In a further preferable embodiment of the ptychographic imaging system, the ptychographic imaging system comprises an optical filter, in particular a polarizer and/or a bandpass filter, arranged between the converging lens and the light source.

In particular, the polarizer can be placed into the beam path before the mirror to further modulate the illumination, thereby contributing to other applications such as Fluorescence FPM. A polarizer is an optical filter that enables light waves of a specific polarization to pass through while blocking light waves of other polarizations. It can filter a beam of light of undefined or mixed polarization into a beam of well-defined polarization.

The bandpass filter is important when using a white light source to keep the bandwidth of the light beams relatively small.

Besides using optical filters in the light path, a beam splitter can also be involved to combine different light sources. The selection of the desired source may be performed by alternating the turning-on and turning-off of filters and shutters.

The invention provides, according to a second aspect, a method for setting up a ptychographic imaging system, comprising placing a rotatable mirror at a 2f plane of a converging lens, wherein the rotatable mirror reflects light beams emitted from at least one light source to the converging lens.

In a preferable embodiment of the method for setting up a ptychographic imaging system, a sample position is arranged at the other 2f plane of the converging lens.

Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate embodiments of the present invention and together with the description serve to explain the principles of the invention.

Other embodiments of the present invention and many of the intended advantages of the present invention will be readily appreciated as they become better understood by reference to the following detailed description. Like reference numerals designate corresponding similar parts.

Fig. 1 shows a ptychographic imaging system according to an embodiment of the invention, wherein the mirror has been rotated to a first illumination angle;

Fig. 2 shows a ptychographic imaging system according to the embodiment of the invention shown in Fig. 1, wherein the mirror has been rotated to a second illumination angle;

Fig. 3 shows a ptychographic imaging system according to the embodiment of the invention shown in Fig. 1, with further optical elements; and

Fig. 4 shows a block diagram of an embodiment of a method for setting up a ptychographic imaging system.

Detailed description of the invention

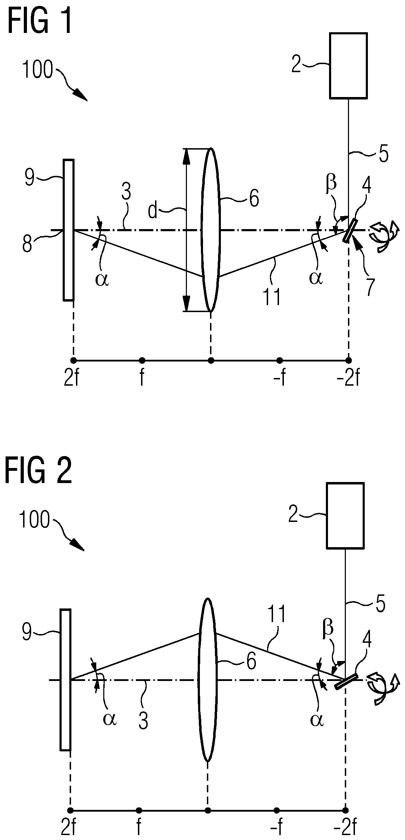

Fig. 1 shows an embodiment of a ptychographic imaging system 100 which comprises a single light source 2, a converging lens 6 and a rotatable mirror 4 which is placed at a 2f plane (denoted as "-2f" in Fig. 1) of the converging lens 6. The rotatable mirror 4 reflects light beams 5 emitted from the single light source 2 to the lower portion of the converging lens 6. A sample 9 to be observed is arranged at the sample position 8 which is at the other 2f plane (denoted as "2f" in Fig. 1) of the converging lens 6. The light beams 5 pass through the lens 6 and converge at the sample 9.

In Fig. 1, further optical components in the beam path such as the objective, the detector/camera and some other lenses are not depicted. Given a selected objective, the resolution limit of the ptychographic imaging system 100 may be dependent on the maximum illumination angel $\alpha_{max}$ which is determined by the diameter d and the focal length f of the converging lens 6 according to the following equation:

$$\alpha_{max} = arc\tan\left(\frac{d/2}{2f}\right).$$

As shown in Fig. 1, the mirror 4 is located at the intersection point 7 between the optical axis 3 and the 2f plane of the converging lens 6, and a normal of the mirror 4 is parallel to the plane formed by the optical axis 3 and the 2f plane of the converging lens 6.

The rotation of the mirror 4 is controlled by a control unit (now shown in Fig. 1). The mirror 4 is rotated about the axis which passes through the intersection point 7 between the optical axis 3 and the 2f plane of the converging lens 6 and is perpendicular to the plane formed by the optical axis 3 and the 2f plane of the converging lens 6.

As shown in Fig. 1, the mirror 4 has been rotated in a position such that the illumination angel $\alpha$ is approximately 20 degree. The emitted light beams 5 and the reflected light beams 11 form an angel β which is the sum of the illumination angel $\alpha$ and 90°, thus amounting to about 110°.

In the embodiment shown in Fig. 1, the single light source 2 is a high-power LED with a working power of 2W.

Fig. 2 shows the same embodiment of a ptychographic imaging system 100 as Fig. 1, wherein the mirror 4 has been clockwise rotated by the control unit by a certain angel such that the light beams 5 are reflected to the upper portion of the converging lens 6. The illumination angle becomes now approximately 30 degree, and the angel β formed by the emitted light beams 5 and the reflected light beams 11 now corresponds to the complementary angel of the illumination angel α and is around 60 degree.

That is, when the mirror 4 has been rotated by a certain angel, the angel of reflection of beams 5 is changed such that the reflected beams 11 arrive at a different position of the lens 6, while the reflected beams 11 passing through the converging lens 6 still converge to the sample 9 placed in the other 2f plane of the lens 6.

A reflected beam before arriving at the lens 6 and the beam which passed through the lens 6 are symmetrical to the lens 6. With the changed angle of reflection due to the rotation of the mirror, the beam which passed through the lens 6, arrives at the sample 9 and illuminates it is adapted accordingly. The ptychographic imaging system 100 comprising the single light source 2 and the rotatable mirror 4 allows for freely choosing an illumination angle for each image, exhibiting the same functionality as the LEDs in an array which are flashed consecutively in order to achieve illumination under a specific illumination angle, meanwhile avoiding the drawbacks existing in the prior art and providing a finer illumination angle selection than the classical LED arrays.

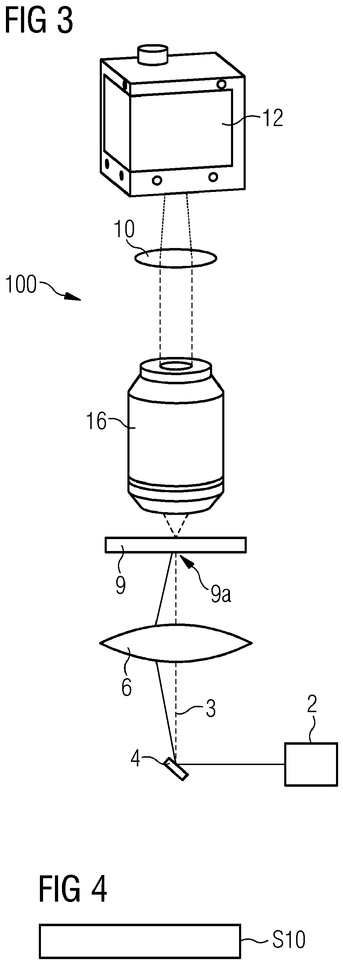

Fig. 3 shows the same embodiment of a ptychographic imaging system 100 as Fig. 1, with further optical elements / components. The ptychographic imaging system 100 further comprises from left to right as shown in the illustration a camera 12 for capturing images of the sample 9, a tube lens 10 and an objective 16. As shown in Fig. 3, a region of interest 9a of the sample 9 is illuminated by the single light source 2 with the help of the rotatable mirror 4 in freely chosen different illumination angles.

The embodiment of the method for setting up a ptychographic imaging system shown in Fig. 4 comprises the step of placing (S10) a rotatable mirror at a 2f plane of a converging lens, wherein the rotatable mirror reflects light beams emitted from at least one light source to the converging lens.

By means of such an easily implementable method, a ptychographic imaging system can be set up in a simple manner and in a relatively short time. In other embodiments which are not shown, there is an actuator attached to the mirror. The actuator receives control signals from a controller either wirelessly or via a control cable in order to rotate the mirror each time by a certain angle and in a certain rotation direction.

It should be understood that all advantageous options, variance in modifications described herein and the foregoing with respect to embodiments of the ptychographic imaging system according to the first aspect may be equally applied to embodiments of the method according to the second aspect, and vice versa.

In the foregoing detailed description, various features are grouped together in one or more examples for the purpose of streamlining the disclosure. It is to be understood that the above description is intended to be illustrative, and not restrictive. It is intended to cover alternatives, modifications and equivalents. Many other examples will be apparent to one skilled in the art upon reviewing the above specification.

List of Reference Signs

| | |
|---|---|
| 2 | light source |
| 3 | optical axis of the converging lens |
| 4 | rotatable mirror |
| 5 | emitted light beams |
| 6 | converging lens |
| 7 | intersection point |
| 8 | sample position |
| 9 | sample |
| 9a | region of interest |
| 10 | tube lens |
| 12 | camera |
| 16 | objective |
| d | diameter of the converging lens |
| α | illumination angle |
| β | angel formed by the emitted light beams and the reflected light beams |
| 11 | reflected beams |
| 100 | ptychographic imaging system |
| S10 | method step |

**EP 4 239 391 A1**

**Claims**

1. A ptychographic imaging system (100), comprising at least one light source (2), a converging lens (6) and a rotatable mirror (4) configured to be placed at a 2f plane of the converging lens (6) and reflect light beams emitted from the light source (2) to the converging lens (6).

2. The ptychographic imaging system (100) according to claim 1, wherein the ptychographic imaging system (100) comprises a sample position (8) placed at the other 2f plane of the converging lens (6).

3. The ptychographic imaging system (100) according to claim 1 or 2, wherein a resolution limit of the ptychographic imaging system (100) is configured to be in relation to a maximum illumination angel which is determined by a diameter (d) and a focal length (f) of the converging lens (6).

4. The ptychographic imaging system (100) according to any of the preceding claims, wherein the mirror (4) is configured to locate at the intersection point (7) between an optical axis (3) and the 2f plane of the converging lens (6), and/or a normal of the mirror (4) is parallel to the plane formed by the optical axis (3) and the 2f plane of the converging lens (6) .

5. The ptychographic imaging system (100) according to any of the preceding claims, wherein an emitted light beam (5) and a reflected light beam (11) form an angel (β) which changes when the mirror (4) is rotated and which is limited by the diameter (d) and the focal length (f) of the converging lens (6) .

6. The ptychographic imaging system (100) according to any of the preceding claims, wherein the mirror (4) is configured to be rotated about the axis which passes through the intersection point (7) between an optical axis (3) and the 2f plane of the converging lens (6) and is perpendicular to the plane formed by the optical axis (3) and the 2f plane of the converging lens (6).

7. The ptychographic imaging system (100) according to any of the preceding claims, wherein the mirror (4) is configured to be rotated by a predefined angle for each image.

8. The ptychographic imaging system (100) according to any of the preceding claims, wherein the ptychographic imaging system (100) comprises a control unit configured to control the position and/or the rotation of the mirror (4).

9. The ptychographic imaging system (100) according to any of the preceding claims, wherein the light source (2) is a collimated light-source.

10. The ptychographic imaging system (100) according to any of the preceding claims, wherein the light source (2) is a laser.

11. The ptychographic imaging system (100) according any of the claims 1-9, wherein the light source (2) is a high-power LED with a working power more than 0.5W, in particular more than 1W, preferably more than 5W.

12. The ptychographic imaging system (100) according to any of the preceding claims, wherein the ptychographic imaging system (100) comprises a beam expander arranged between the converging lens and the light source.

13. The ptychographic imaging system (100) according to any of the preceding claims, wherein the ptychographic imaging system (100) comprises an optical filter, in particular a polarizer and/or a bandpass filter, arranged between the converging lens and the light source.

14. A method for setting up a ptychographic imaging system (100), comprising placing (S10) a rotatable mirror (4) at a 2f plane of a converging lens (6), wherein the rotatable mirror (4) reflects light beams emitted from at least one light source to the converging lens (6).

15. The method according to claim 14, further comprising arranging a sample position (8) at the other 2f plane of the converging lens (6).

7

## FIG 1

100

| 2f | f | | -f | -2f |
|---|---|---|---|---|

## FIG 2

100

| 2f | f | | -f | -2f |
|---|---|---|---|---|

## FIG 3

## FIG 4

Europäisches
Patentamt

European
Patent Office

Office européen
des brevets

## EUROPEAN SEARCH REPORT

**Application Number**

EP 22 15 9885

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAO XIAO ET AL: "Tunable-illumination for laser Fourier ptychographic microscopy based on a background noise-reducing system", OPTICS COMMUNICATIONS, ELSEVIER, AMSTERDAM, NL, vol. 468, 19 March 2020 (2020-03-19), XP086144348, ISSN: 0030-4018, DOI: 10.1016/J.OPTCOM.2020.125764 [retrieved on 2020-03-19] * abstract * * Page 2, section "1.Introduction", 2nd&3rd paragraphs; Page 2, section "2.System-setup", 1st, 2nd & 3rd paragraphs&last paragraph; Page 4, section "2.System-setup", 1st paragraph; Pages 4-5, section "3.Image reconstruction", 1st paragraph to last paragraph * * figures 1-9 * | 1-15 | INV. G02B21/36 G02B7/182 G02B26/08 |
| | ----- | | |
| X | TAO XIAO ET AL: "High-resolution DMD-FPM system based on ring pattern phase retrieval algorithm", PROCEEDINGS OF SPIE; [PROCEEDINGS OF SPIE ISSN 0277-786X VOLUME 10524], SPIE, US, vol. 10752, 17 September 2018 (2018-09-17) , pages 107521K-107521K, XP060110685, DOI: 10.1117/12.2319648 ISBN: 978-1-5106-1533-5 * abstract * * Pages 1-2, section "1. INTRODUCTION", 3rd paragraph; Page 4, section "3. EXPERIMENTS", 1st& 2nd paragraphs * * figures 1-6 * | 1,15 | **TECHNICAL FIELDS SEARCHED (IPC)** G02B |
| | ----- | | |
| | -/-- | | |

The present search report has been drawn up for all claims

| Place of search | Date of completion of the search | Examiner |
|---|---|---|
| Munich | 19 August 2022 | Kienle, Philipp |

EPO FORM 1503 03.82 (P04C01)

| | Europäisches Patentamt<br>European Patent Office<br>Office européen des brevets | **EUROPEAN SEARCH REPORT** | **Application Number**<br>EP 22 15 9885 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENG JUANJUAN ET AL: "Digital micromirror device based ptychographic phase microscopy", OPTICS COMMUNICATIONS, ELSEVIER, AMSTERDAM, NL, vol. 498, 24 June 2021 (2021-06-24), XP086700004, ISSN: 0030-4018, DOI: 10.1016/J.OPTCOM.2021.127218 [retrieved on 2021-06-24] * abstract * * Page 2, section "1. Introduction", last paragraph; Page 2, section "2 Experimental setup", 1stto last paragraphs * * figures 1-7 *<br><br>----- | 1,15 | |
| X | XIAO YI ET AL: "Digital micro-mirror device based laser-illumination Fourier ptychographic microscopy for high-speed and high-resolution Imaging", ALGORITHMS AND TECHNOLOGIES FOR MULTISPECTRAL, HYPERSPECTRAL, AND ULTRASPECTRAL IMAGERY XIX – PROCEEDINGS OF SPIE, SPIE, US, vol. 11698, 5 March 2021 (2021-03-05), pages 116980D-116980D, XP060141718, ISSN: 0277-786X, DOI: 10.1117/12.2579176 ISBN: 978-1-5106-4548-6 * abstract * * Page 2, section "1. INTRODUCTION", 1st paragraph; Pages 2-3, section "2. METHODOLOGY", 1st& 2nd paragraphs * * figures 1-5 *<br><br>----- | 1,15 | TECHNICAL FIELDS SEARCHED (IPC) |

The present search report has been drawn up for all claims

| Place of search | Date of completion of the search | Examiner |
|---|---|---|
| Munich | 19 August 2022 | Kienle, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016187591 A1

**Non-patent literature cited in the description**

- **KONDA.** *Fourier ptychography: current applications and future promises*
- **HORSTMEYER.** *A phase space model of Fourier ptychographic microscopy*
- **CHEN.** *Apodized coherent transfer function constraint for partially coherent Fourier ptychographic microscopy*
- **TIAN.** *Multiplexed coded illumination for Fourier Ptychography with an LED array microscope*